# EUROPÄISCHE PATENTSCHRIFT

(11) **EP 0 819 577 B1**
(45) Veröffentlichungstag und Bekanntmachung des Hinweises auf die Patenterteilung: **09.10.2002**
(21) Anmeldenummer: 97110992.1
(22) Anmeldetag: 02.07.1997
(51) Int. Cl.: B60Q 7/00

(54) **Warndreieck**
Warning triangle
Triangle de signalisation

(30) Priorität: 17.07.1996 DE 19628746
(43) Veröffentlichungstag der Anmeldung: 21.01.1998
(73) Patentinhaber: Geka Günter & Kastl GmbH, 73054 Eislingen (DE)
(72) Erfinder: Kastl, Gottfried, 73054 Eislingen (DE)
(74) Vertreter: Jeck, Anton, Dipl.-Ing.

(56) Entgegenhaltungen:
- FR-A- 2 246 694
- US-A- 5 551 370

## Beschreibung

Die Erfindung betrifft ein Warndreieck nach dem Oberbegriff des Anspruches 1.

Bei herkömmlichen Warndreiecken der eingangs genannten Art, wie sie z.B. in der DE-Gm 1 998 435 beschrieben sind, weist der aus Metall bestehende Basiskörper vertikal vorstehende Laschen auf, die mit der waagerechten Leiste mittels Nieten verbindbar sind. Bei solchen Laschen, die eine bestimmte Höhe haben müssen, um an der waagerechten Leiste ordnungsgemäß befestigt werden zu können, wird die Breite des Warndreiecks größer. Bedingt dadurch, daß solche Laschen am Basiskörper angeschweißt werden müssen, was einen zusätzlichen Arbeitsvorgang voraussetzt, werden die Herstellungskosten sowie der Montageaufwand des gesamten Warndreiecks erhöht.

Ein ähnliches Warndreieck zeigt das gattungsgemäße Dokument FR-A-2 246 694.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1 gelöst.

Man erkennt, daß die Erfindung jedenfalls dann verwirklicht ist, wenn es sich um ein Warndreieck mit einem vorzugsweise aus Kunststoff bestehenden Basiskörper mit entsprechenden Öffnungen handelt, der z.B. durch Spritzen herstellbar ist, wodurch gleichzeitig auch die Gelenkorgane für die angelenkten Standbeine gebildet werden können. Die Gelenkbeine können sodann problemlos eingeklipst werden. Das Gestell des Warndreiecks besteht praktisch nur aus den Standbeinen und einem einstückigen Basiskörper, der in seinem Querschnitt vorzugsweise V-förmig ist. Da auch die waagerechte Leiste durch Spritzen herstellbar ist, wobei wegen Belastung bestimmte Verstärkungen der Leiste im Bereich der Vorsprünge vorgesehen sein können, werden die Herstellung und insbesondere der Zusammenbau des Warndreiecks deutlich verbilligt und vereinfacht. Der Zusammenbau beruht im wesentlichen auf der in der Praxis bewährten Steck- und Klipsverbindungen. Hierbei können die Vorsprünge und die zugeordneten Ausnehmungen so gewählt sein, daß sie miteinander durch Widerhaken verbunden sind.

Weitere zweckmäßige und vorteilhafte Ausgestaltungen der Erfindung gehen aus den Unteransprüchen hervor.

Eine besonders zweckmäßige Ausgestaltung sieht vor, daß die Ausnehmungen als durchgehende Öffnungen ausgebildet sind, die von den Vorsprüngen durchquert sind. Allgemein können die Ausnehmungen auch als Sacklochbohrungen ausgebildet sein, in welche die Vorsprünge einbringbar sind. Im Rahmen dieses Erfindungsgedankens ist es besonders zweckmäßig, wenn die Vorsprünge mit ihren Ausnehmungen form- und/oder kraftschlüssig verbindbar sind. Durch diese Maßnahmen wird eine Verbindung zwischen dem Basiskörper und der waagerechten Leiste erreicht, die für einstückige Bauteile charakteristisch ist.

Eine weitere zweckmäßige Ausgestaltung sieht vor, daß die Vorsprünge an der Leiste bzw. am Basiskörper angeformt sind.

Ferner ist vorgesehen, daß die freien Enden der Vorsprünge mit Haltekörpern verbindbar sind, die vorzugsweise an der dem Boden zugekehrten Seite des Basiskörpers positionierbar sind. Handelt es sich um ein Warndreieck, an dessen Basiskörper die Standbeine angelenkt und in unwirksamer Betriebsstellung unterhalb des Basiskörper positioniert sind, dann ist es zweckmäßig, wenn die Standbeine in ihrem zusammengeklappten Zustand von den Haltekörpern gehalten und mit Abstand zueinander angeordnet sind. Hierdurch erfüllen die Haltekörper zwei Funktionen: zum einen verbinden sie die Vorsprünge mit dem Basiskörper, zum anderen gewährleisten sie, daß die regelmäßig aus Metall bestehenden Standbeine miteinander nicht in Kontakt stehen, so daß ein "Klappern" der Standbeine während der Fahrt eines Kraftfahrzeuges verhindert wird.

Ein Ausführungsbeispiel der Erfindung ist in der Zeichnung schematisch dargestellt und wird im folgenden näher erläutert. Es zeigen
- Fig. 1: ein Warndreieck in Explosionsdarstellung,
- Fig. 2: einen Basiskörper in vertikaler Draufsicht und

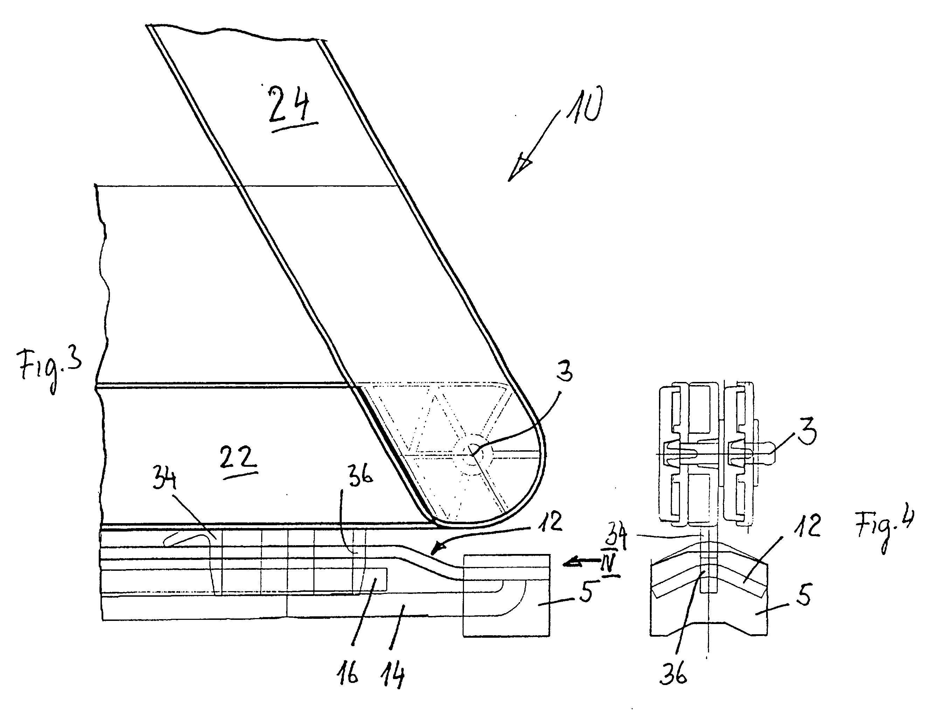

- Fig. 3: einen Haltekörper in vertikalem Querschnitt und vergrößert dargestellt.

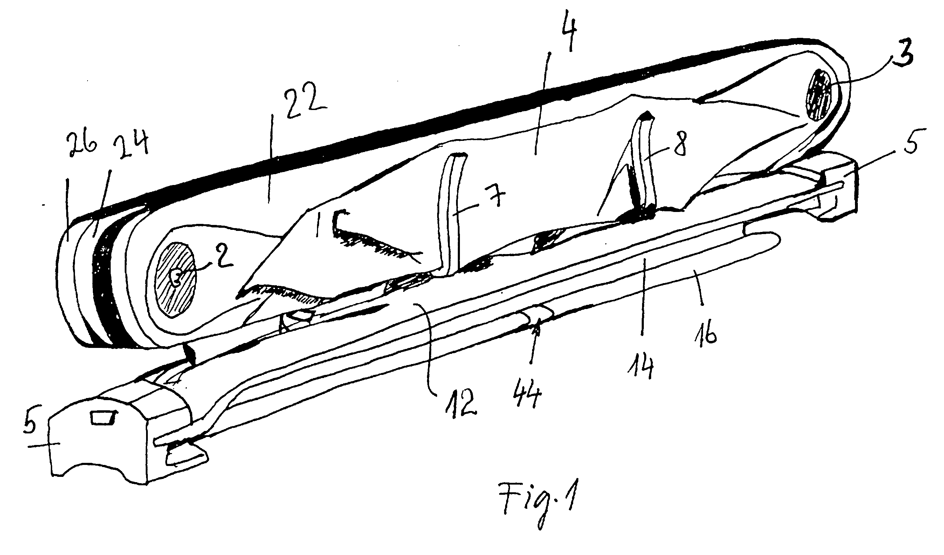

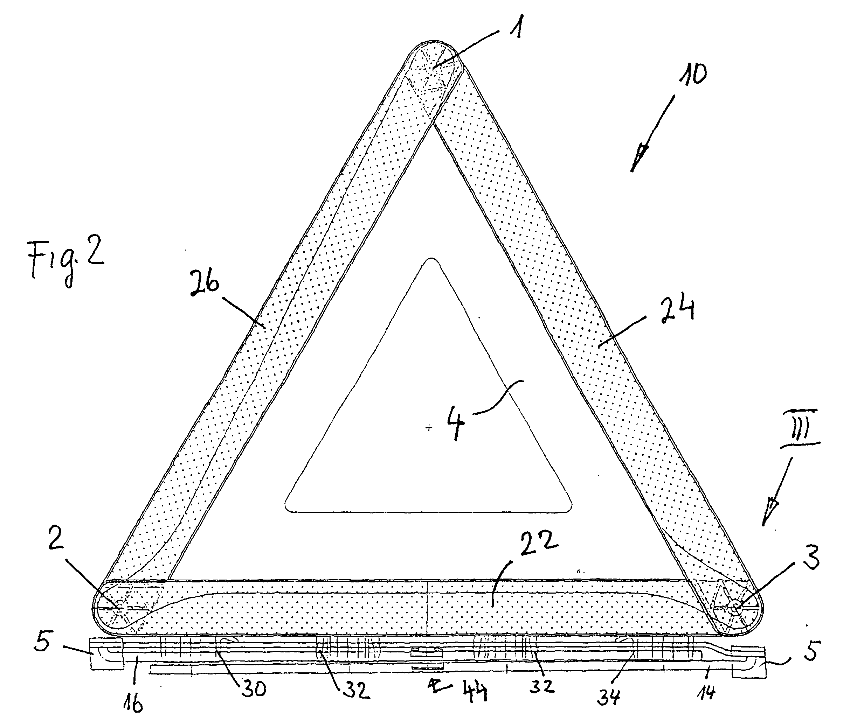

In Fig. 1 ist ein Warndreieck 10 mit einem Basiskörper 12 dargestellt, das vier Standbeine 14, 16, die hinteren Standbeine sind nicht dargestellt, sowie eine waagerechte und zwei angelenkte rückstrahlende Leisten 22, 24, 26 aufweist. Die waagerechte Leiste 22 weist Vorsprünge 30, 32, 34 auf, die mit entsprechenden Ausnehmungen 36, des Basiskörpers 12 betriebsgemäß verbindbar sind. Die Ausnehmungen 36, sind als durchgehende Öffnungen ausgebildet, die von den Vorsprüngen 30, 32, 34 durchquerbar sind. Die Vorsprünge 30, 32, 34 sind so ausgebildet, daß sie mit ihren Ausnehmungen 36, form- und kraftschlüssig verbindbar sind. Ferner ist zu erkennen, daß die Vorsprünge 30, 32, 34 an der Leiste 22 angeformt sind, wobei die freien Enden dieser Vorsprünge mit Haltekörpern 44 (Fig. 2) fest verbindbar sind. Der Basiskörper 12 ist so ausgebildet, daß an ihm die Standbeine 14-20 angelenkt und in unwirksamer Betriebsstellung unterhalb des Basiskörper 12 positionierbar sind. Dabei sind die Standbeine 14-20 in ihrem zusammengeklappten Zustand von den Haltekörpern 44 gehalten und mit Abstand zueinander angeordnet. Der Basiskörper 12 sowie der Haltekörper 44 sind aus Kunststoff gebildet. Ferner läßt sich erkennen, daß der Basiskörper 12 im Querschnitt V-förmig ist, so daß die Standbeine in der dem Boden zugekehrten Seite unterbringbar sind. Die freien Enden der Vorsprünge 30, 32, 34 sind so bemessen, daß sie in Öffnungen der Haltekörper 44 einbringbar sind und mit diesem unverrrückbar verbindbar sind. Die Haltekörper 44 sind baumartig ausgebildet und weisen Aufnahmen für die Standbeine 14-20 auf, so daß diese miteinander nicht in Berührung stehen, wodurch unerwünschte Geräusche (klappern) verhindert werden.

Das Gestell des vorgeschlagenen Warndreiecks besteht somit im wesentlichen nur aus dem Basiskörper 12, an dem die Standbeine 14-20 durch Einklipsen angelegt sind, und den Haltekörpern 44, die zum einen eine feste Verbindung zwischen den Vorsprüngen 30, 32, 34 und dem Basiskörper 12 herstellen und zum anderen gewährleisten, daß die Standbeine, die regelmäßig aus Stahl bestehen, nicht miteinander in Berührung stehen.

## Patentansprüche

1. Warndreieck (10) mit einem Basiskörper (12), der Standbeine (14-20) sowie eine waagerechte Leiste (22) und zwei angelenkte rückstrahlende Leisten (24, 26) trägt, wobei die waagerechte Leiste (22) Vorsprünge (30, 32, 34) bzw. Ausnehmungen aufweist, die mit entsprechenden Ausnehmungen (36) bzw. Vorsprüngen des Basiskörpers (12) betriebsgemäß verbindbar sind,
**dadurch gekennzeichnet,**
**dass** die freien Enden der Vorsprünge (30, 32, 34) mit für die am Basiskörper (12) angelenkten Standbeine (14, 16) vorgesehenen Haltekörpern (44) verbindbar sind.

2. Warndreieck nach Anspruch 1,
**dadurch gekennzeichnet,**
**daß** die Ausnehmungen (36) als durchgehende Öffnungen ausgebildet sind, die von den Vorsprüngen (30, 32, 34) durchquert sind.

3. Warndreieck nach Anspruch 1 oder 2,
**dadurch gekennzeichnet,**
**daß** die Vorsprünge (30, 32, 34) mit ihren Ausnehmungen (36) form- und/oder kraftschlüssig verbindbar sind.

4. Warndreieck nach einem der Ansprüche 1 bis 3,
**dadurch gekennzeichnet,**
**daß** die Vorsprünge (30, 32, 34) an der Leiste (22) bzw. am Basiskörper angeformt sind.

5. Warndreieck nach einem der Ansprüche 1 - 4,
**dadurch gekennzeichnet,**
**daß** die Haltekörper (44) mit den Vorsprüngen (30, 32, 34) lösbar verbindbar sind.

6. Warndreieck nach einem der Ansprüche 1 bis 5, an dessen Basiskörper (12) die Standbeine (14, 16) angelenkt und in unwirksamer Betriebsstellung unterhalb des Basiskörpers (12) positionierbar sind,
**dadurch gekennzeichnet,**
**daß** die Standbeine (14,16) in ihrem zusammengeklappten Zustand von dem Haltekörper (44) gehalten und mit Abstand zueinander angeordnet sind.

7. Warndreieck nach Anspruch 6,
**dadurch gekennzeichnet,**
**daß** der Basiskörper (12) sowie der Haltekörper (44) aus Kunststoff bestehen.

## Claims

1. Warning triangle (10), having a base member (12) which carries supporting legs (14-20) as well as one horizontal bar (22) and two pivotally mounted, reflective bars (24, 26), the horizontal bar (22) including projection members (30, 32, 34) and recesses respectively, which are operatively connectable to corresponding recesses (36) and projection members respectively of the base member (12), **characterised in that** the free ends of the projection members (30, 32, 34) are connectable to retaining members (44), which are provided for the supporting legs (14, 16) pivotally mounted on the base member (12).

2. Warning triangle according to claim 1, **characterised in that** the recesses (36) are in the form of through-apertures which are traversed by the projection members (30, 32, 34).

3. Warning triangle according to claim 1 or 2, **characterised in that** the projection members (30, 32, 34) are connectable to their recesses (36) in a form- and/or force-fitting manner.

4. Warning triangle according to one of claims 1 to 3, **characterised in that** the projection members (30, 32, 34) are shaped to fit the bar (22) and on the base member respectively.

5. Warning triangle according to one of claims 1 - 4, **characterised in that** the retaining members (44) are detachably connectable to the projection members (30, 32, 34).

6. Warning triangle according to one of claims 1 to 5, the supporting legs (14, 16) being pivotally mounted on the base member (12) of said triangle and being positionable beneath the base member (12) in the inactive operational position, **characterised in that** the supporting legs (14,16) are retained, in their folded state, by the retaining member (44) and disposed with a spacing therebetween.

7. Warning triangle according to claim 6, **characterised in that** the base member (12) as well as the retaining member (44) are formed from plastics material.

## Revendications

1. Triangle de signalisation (10) avec un corps de base (12) portant des pieds de support (14-20) ainsi qu'une lame horizontale (22) et deux lames réfléchissantes articulées (24, 26), la lame horizontale (22) étant munie d'avancées (30, 32, 34) ou d'évidements qui, en état d'utilisation, peuvent être reliées avec des évidements correspondants (36) ou avec des avancées du corps de base (12), **caractérisé en ce que** les extrémités libres des avancées (30, 32, 34) peuvent être reliées avec des éléments de maintien (44) prévus pour les pieds de support (14, 16) articulés sur le corps de base (12).

2. Triangle de signalisation selon la revendication 1, **caractérisé en ce que** les évidements (36) sont réalisés comme ouvertures traversantes dans lesquelles passent les avancées (30, 32, 34).

3. Triangle de signalisation selon la revendication 1 ou 2, **caractérisé en ce que** les avancées (30, 32, 34) peuvent être reliées en complémentarité de forme et/ou de manière résistante aux efforts avec leurs évidements (36).

4. Triangle de signalisation selon l'une des revendications 1 à 3, **caractérisé en ce que** les avancées (30, 32, 34) sont formées sur la lame (22) ou sur le corps de base.

5. Triangle de signalisation selon l'une des revendications 1 - 4, **caractérisé en ce que** les éléments de maintien (44) peuvent être reliés de manière amovible avec les avancées (30, 32, 34).

6. Triangle de signalisation selon l'une des revendications 1 à 5 sur le corps de base (12) duquel sont articulés les pieds de support (14, 16) qui, en position d'utilisation inactive, sont positionnables en dessous du corps de base (12), **caractérisé en ce que** dans leur position repliée les pieds de support (14, 16) sont tenus par l'élément de maintien (44) et sont disposés avec un espace entre eux.

7. Triangle de signalisation selon la revendication 6, **caractérisé en ce que** le corps de base (12) ainsi que l'élément de maintien (44) sont réalisés en matériau synthétique.
